# EUROPEAN PATENT APPLICATION

(11) **EP 2 965 952 A1**
(43) Date of publication of application: **13.01.2016**
(21) Application number: 15176224.2
(22) Date of filing: 10.07.2015
(51) Int. Cl.: B60R 13/10

(54) **ADVERTISING FRAME FOR A LICENSE PLATE**

(30) Priority: 10.07.2014 ES 201430960 U
(71) Applicant: INDUSTRIAS SAMAR'T, S.A., 17600 Figueres (Gerona) (ES)
(72) Inventor: SANCHEZ CASADEVALL, Enrique, 17600 Figueras (Girona) (ES)
(74) Representative: Munoz Garcia, Antonio

(57) **Abstract**

The present invention relates to an advertising frame for a license plate having two independent parts: a planar rectangular support base (2), with a perimetral casing (3) where the plate (4) fits; and a cover (5) with a printable planar upper surface (6) which is coupled to said base (2) with articulated snap-fitting means allowing an open position for incorporating the plate (4) on the base (2) or removing same, and a closed position securing the plate in the lower portion thereof. To secure the plate (4), the base (2) has a first group of tabs (7) determining a prolongation of the casing (3) towards the center of the base, a second group of tabs (9) of greater length prolonging a step (8) for supporting the plate (4). The cover (5) has articulated coupling by means of shafts (10) fitting between perforated flanges (11) of the lower edge of the base (2).

## Description

### Object of the Invention

As expressed in the title of the present specification, the invention relates to an advertising frame for a license plate which provides several advantages and novelty features for its intended function which will be described in detail below and entail an improvement of the current state of the art.

More particularly, the object of the invention focuses on a frame for license plates the purpose of which is to serve as a support for incorporating said plates on the body of vehicles, which allows incorporating advertisement and/or information about the advertisement, usually of the vehicle sales establishment or dealership, this frame having a series of structural elements facilitating placement of the cover and incorporation of said advertisement as it is made up of two independent parts that are coupled to one another by means of snap-fitting.

### Field of Application of the Invention

The field of application of the present invention is encompassed within the sector of the industry dedicated to manufacturing license plates, focusing particularly on the field of support frames for license plates.

### Background of the Invention

As a reference to the current state of the art, it must be pointed out that although the existence of support frames for license plates, most of them incorporating advertisement elements on one of their sides, usually the lower side, is well-known, at least the applicant is unaware of the existence of a support frame having technical, structural and constitutive features similar to those of the frame herein proposed and claimed.

### Brief Description of the Invention

The advertising frame for a license plate proposed by the present invention is configured as a novelty within its field of application, the characterizing details distinguishing it from what is already known being suitably listed in the final claims accompanying the present specification of the invention.

Specifically, as pointed out above, the invention proposes a new type of advertising support frame for license plates the configuration of which allows an easy and quick placement of the plate as well as greater practicality for incorporating printed advertisement thereon, as it is formed by two independent elements, i.e., a plate holder base and a printable cover, that are coupled to one another by snap-fitting.

More particularly, the plate holder base is configured as a rectangular body, usually made of a plastic material, for example PET, and having a configuration similar to that of the intended license plate, having a casing forming a step in the form of a perimetral projection within which the plate is snugly fitted.

This base furthermore has a first group of tabs distributed between the upper side and the sides of the mentioned casing, under which, in combination with a support step, the upper border and the sides of the plate are secured, there furthermore being provided a second group of tabs of greater length and distributed around the entire perimeter of the casing which support the plate and act like a spring to compensate for the difference in thickness existing between the different types of license plates existing on the market, so that using the frame for different types of plates is thereby allowed.

The printable cover is in turn formed by a planar part on its upper surface which facilitates the process of printing the advertisement thereon. In addition to having suitable dimensions for adapting to and occupying the lower portion of the casing of the base, this cover has quick snap-on coupling means for coupling to said base allowing its opening and closing in a practical and simple manner for placing or taking out the license plate.

Specifically, the cover has in its rear portion shafts fitting between flanges provided for that purpose on the lower edge of the base, such that upon inserting said shafts in said flanges the cover is attached in an articulated manner to the base in the lower portion thereof. To facilitate the insertion of said shafts between said flanges, a planar area with a smaller diameter facilitating said introduction has been provided therein.

In a parallel manner, there has been provided in the rear portion of the cover a series of lugs formed by wedged symmetrical pairs which fit snugly by way of clips into as many other coinciding openings provided in the lower portion of the base, such that once the cover and the base are attached to one another, by positioning said cover in parallel on the base, it can be snap-fitted therein, said clip lugs being inserted into said openings, both elements being firmly attached to one another.

Furthermore, it must be pointed out that once the cover is closed it secures the license plate in its lower portion. In order to remove the plate in a simple manner, re-opening the cover and swiveling it on its shafts will be sufficient for taking out the plate fixed between the aforementioned two groups of tabs provided in the upper portion and the sides of the perimetral casing.

The described advertising frame for a license plate therefore represents an innovation having structural and constitutive features that were unknown up until now, and these reasons combined with its practical usefulness give the invention sufficient grounds for obtaining the exclusive right that is sought.

### Description of the Drawings

To complement the description that is being made and for the purpose of aiding to better understand the features of the invention, a set of drawings is attached to the present specification as an integral part thereof, in which the following has been depicted with an illustrative and non-limiting character:

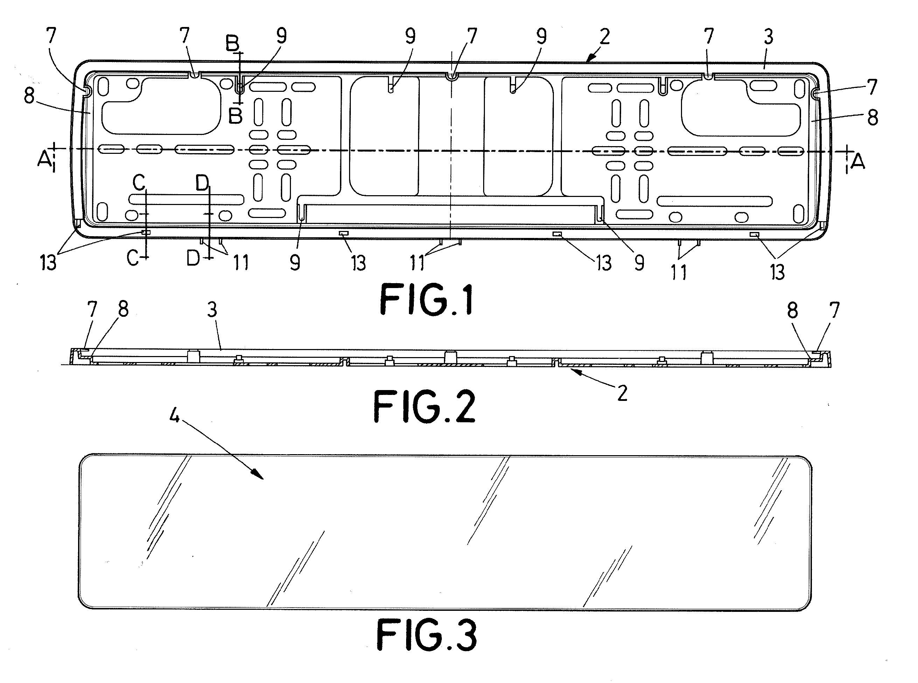

Figure 1 shows a front elevational view of the base contemplated in the frame object of the invention, the general configuration and the main portions it comprises being shown therein.
Figure 2 shows a section view according to section A-A indicated in Figure 1 of the base of the frame according to the invention.
Figure 3 shows a schematic front elevational view of a type a license plate for which the frame of the invention is intended.
Figure 4 shows an enlarged section view according to section B-B of Figure 1 of a portion of the base of the frame of the invention, showing the coupling of the upper border of the plate between the two groups of tabs incorporated in said base in the perimetral casing for the fixing thereof.
Figure 5 shows a front elevational view of the cover incorporated in the frame of the invention coupleable to the lower portion of the base, showing the attachment elements that it incorporates for the fixing thereof to said base.
Figure 6 shows a top plan view of the cover shown in Figure 5, shafts allowing the articulated attachment thereof to the base and lugs in the form of clips being clearly shown therein.
Figure 7 shows an enlarged profile view of one of the shafts incorporated in the cover, the planar area thereof to facilitate its introduction between the flanges of the base being shown.
Figure 8 shows an enlarged view of one of the pairs of wedge-shaped lugs incorporated in the cover for snap-fitting with the base.
Figure 9 shows a front elevational view of the frame of the invention once the base and cover are assembled, the general configuration thereof including the intended license plate being shown.
Figures 10 and 11 show respective enlarged section views of the respective sections C-C and D-D indicated in Figure 1 and the lower border of the base at the points where it incorporates openings for receiving the clip lugs of the cover and flanges for receiving the shafts of the cover.
Figures 12 and 13 show respective views similar to those shown in Figures 10 and 11, respectively, including the cover incorporated at the lower portion of the base shown, the mentioned coupling of the lugs in the openings and of the shafts in the flanges being shown, the cover being depicted in a closed position in Figure 12 and in an open position in Figure 13.

### Preferred Embodiment of the Invention

In view of the mentioned drawings and according to the numbering used, a preferred but non-limiting example of the proposed advertising frame for a license plate which comprises the parts and elements indicated and described in detail below can be seen therein.

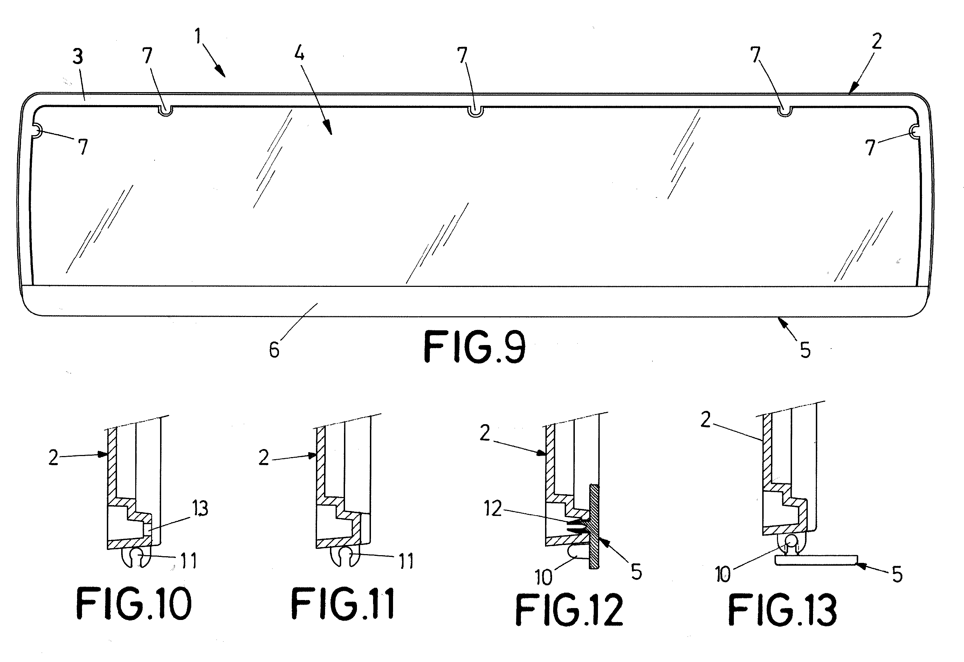

Therefore, as seen in said drawings the frame (1) at hand is configured from two independent parts: a support base (2) consisting of a considerably planar rectangular body, having a perimetral casing (3) within which the intended license plate (4) fits snugly; and a cover (5) having a printable planar upper surface (6) which is coupled to said base (2) by means of articulated securing and snap-fitting covering the lower portion thereof and allowing a movement articulated with the base (2) for arranging it in an open position (Figure 13), which allows incorporating the plate (4) on the base (2) or removing it, and a closed position (Figures 9 and 12), keeping said plate (4) secured on said base (2) in the lower portion thereof.

Furthermore, in order to secure the plate (4) in the upper portion thereof, the base (2) has a first group of tabs (7) distributed between the upper side and the sides of the perimetral casing (3) and determining a prolongation of said casing (3) towards the center of the base such that the upper border and the sides of the plate (4) are arranged below same, being supported on a step (8) internally surrounding the mentioned casing (3).

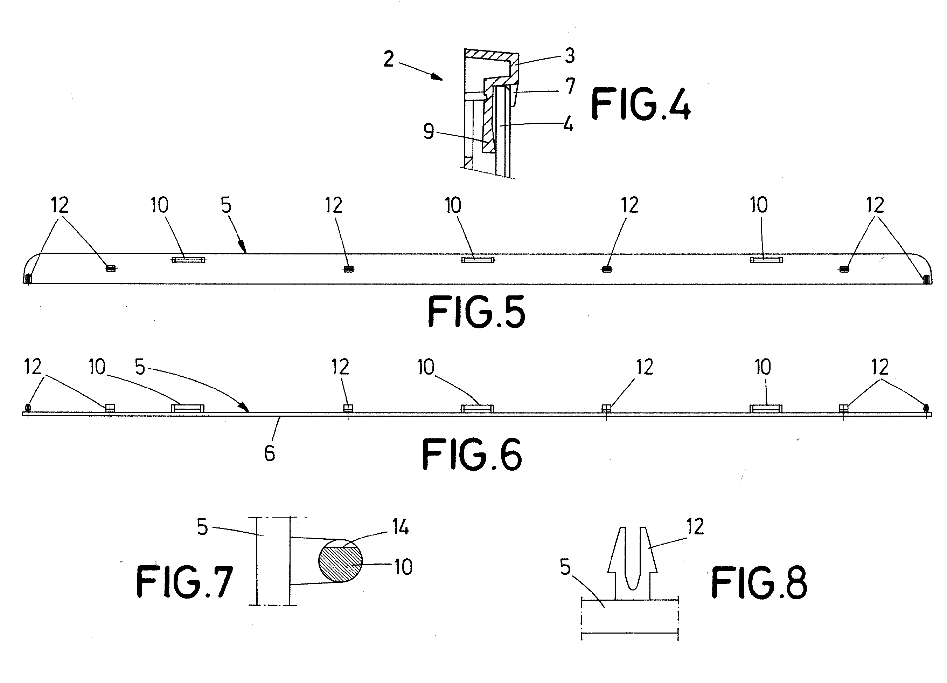

Likewise, the base (2) also has a second group of tabs (9) of greater length and distributed around the entire perimeter of the casing (3) as a prolongation of the aforementioned step (8), which, as shown in Figure 4, are arranged such that they support the plate (4) and act like a spring to compensate for the difference in thickness that may exist between different types of license plates.

To fix the cover (5) to the base (2), said cover (5) in turn has, as articulated coupling means and snap-fitting means for coupling and snap-fitting to same, shafts (10) in the rear portion thereof fitting between pairs of perforated flanges (11) provided for that purpose on the lower edge of said base (2) and pairs of lugs (12) in the form of wedged symmetrical clips fitting snugly into as many other coinciding openings (13) provided in the lower portion of the base (2), as seen in Figures 10 to 13.

Figure 7 shows how, to facilitate the insertion of the shafts (10) between said flanges (11), a planar area (14) determining a section with a smaller diameter has been provided in said shafts facilitating said introduction.

Having sufficiently described the nature of the present invention as well as the manner of putting it into practice, it is not considered necessary to further describe the invention so that a person skilled in the art can comprehend the scope thereof and advantages derived from it, stating that it could be carried out to practice within its essential features in other embodiments differing in detail from that indicated by way of example, and such embodiments would also be covered by the protection that is sought provided that the fundamental principle thereof is neither altered, changed nor modified.

## Claims

1. An advertising frame for a license plate, **characterized in that** it is configured from two independent parts: a support base (2) consisting of a considerably planar rectangular body, having a perimetral casing (3) within which the intended license plate (4) fits snugly and is secured; and a cover (5) having a printable planar upper surface (6) which is coupled to said base (2) covering the lower portion thereof with articulated fixing means and snap-fitting means allowing, respectively, a movement articulated with the base (2) for placing it in an open position in order to incorporate the plate (4) on the base (2) or remove it, and a closed position keeping said plate (4) secured on the base (2) in the lower portion thereof.

2. The advertising frame for a license plate according to claim 1, **characterized in that** to secure the plate (4), the base (2) has a first group of tabs (7) distributed between the upper side and the sides of the perimetral casing (3) determining a prolongation of said casing (3) towards the center of the base such that the upper border and the sides of the plate (4) are arranged below same, being supported on a step (8) internally surrounding the mentioned casing (3).

3. The advertising frame for a license plate according to claim 2, **characterized in that** the base (2) furthermore has a second group of tabs (9) of greater length and distributed around the entire perimeter of the casing (3) as a prolongation of the aforementioned step (8), which tabs are arranged such that the plate (4) is supported on them.

4. The advertising frame for a license plate according to any of claims 1-3, **characterized in that** for fixing thereof to the base (2), the cover (5) has, as articulated coupling means, shafts (10) in the rear portion thereof fitting between pairs of perforated flanges (11) provided for that purpose on the lower edge of said base (2).

5. The advertising frame for a license plate according to claim 4, **characterized in that** to facilitate the insertion of the shafts (10) between the flanges (11), a planar area (14) determining a section with a smaller diameter has been provided in said shafts.

6. The advertising frame for a license plate according to any of claims 1-5, **characterized in that** for fixing thereof to the base (2), the cover (5) has, as snap-fitting means for snap-fitting to same, pairs of lugs (12) in the form of wedged symmetrical clips fitting snugly into as many other coinciding openings (13) provided in the lower portion of the base (2).
